# EUROPÄISCHE PATENTSCHRIFT

(11) **EP 1 764 266 B1**
(45) Veröffentlichungstag und Bekanntmachung des Hinweises auf die Patenterteilung: **18.06.2008**
(21) Anmeldenummer: 06018676.4
(22) Anmeldetag: 06.09.2006
(51) Int. Cl.: B60R 7/04, B60N 2/46

(54) **Mittelkonsole für ein Fahrzeug**
Center console for a vehicle
Console centrale pour un véhicule

(30) Priorität: 16.09.2005 DE 102005044436
(43) Veröffentlichungstag der Anmeldung: 21.03.2007
(73) Patentinhaber: Lisa Dräxlmaier GmbH, 84137 Vilsbiburg (DE)
(72) Erfinder: Reischer, Franz, 84339 Unterdietfurt (DE); Windl, Michael, 4028 Landshut (DE)
(74) Vertreter: HOFFMANN EITLE

(56) Entgegenhaltungen:
- EP-A- 1 486 374
- DE-A1- 10 032 661
- DE-A1- 10 032 684
- DE-A1- 10 247 453
- JP-A- 8 310 309
- US-A1- 2005 133 507

## Beschreibung

Die vorliegende Erfindung betrifft eine Mittelkonsole für ein Fahrzeug,
- mit einem sich in Fahrzeuglängsrichtung erstreckenden Grundkörper, mit einem Innenraum zur Aufnahme von Gegenständen,
- mit einem Deckel, der zumindest teilweise die Oberseite des Grundkörpers bildet und um eine im Wesentlichen in Mittelkonsolenlängserstreckung verlaufende Achse in eine Schließ- bzw. eine Offenstellung verschwenkbar ist,
- wobei der Deckel in der Schließstellung mit seiner Oberseite zumindest einen Teil einer Armauflage bildet und in seiner Offenstellung den Innenraum frei gibt,
- ferner mit einer Betätigungsmechanik für den Deckel, welche mit einem Antrieb, einer Verriegelungs- und einer Entriegelungseinrichtung sowie einer Bremseinrichtung ausgestattet ist.
   Mittelkonsolen dieser Art sind in den verschiedensten Bauformen seit langem bekannt.

Der Deckel ist dabei in den meisten Fällen gegenüber dem Grundkörper, der häufig als langgestrecktes kasten-, block- oder schalenartiges Einbauteil ausgebildet ist, um eine in Fahrzeugquerrichtung oder in Fahrzeuglängsrichtung verlaufende, weitgehend horizontale Achse verschwenkbar.

Bekannt sind auch Konstruktionen, bei denen der Deckel geteilt ist und nach Art von Flügeln (so genannte Schmetterlingsdeckel) um zwei parallel zueinander verlaufende Achsen in seine Offenstellung verschwenkt werden kann.

Der nach dem Verschwenken des Deckels bzw. der Deckelflügel frei liegende Innenraum des Grundkörpers dient bekanntermaßen zur Aufnahme von Getränkedosen, Telefonhörern, Handyhalterungen, CD-Aufnahmeboxen oder dergleichen und ist mit entsprechenden Halterungen bzw. Einbauten für die jeweiligen Gegenstände ausgestattet.

Die Oberseite des Deckels bzw. der Deckelflügel ist meist gepolstert und dient in der Schließstellung als Armauflage für den Fahrzeuglenker oder den Beifahrer.

Die Betätigungsmechanik besteht in der Regel bei derartigen bekannten Konstruktionen aus einer Hebelanordnung, die mit einem Feder- oder Elektromotorantrieb in Verbindung steht. Die Entriegelungseinrichtungen wiederum können Drucktasten, Druckflächen oder dergleichen sein, die mit Verriegelungseinrichtungen in Form von Haken-, Rast- oder Sperranordnungen zusammen wirken. Als Bremseinrichtungen werden häufig so genannte Silikonbremsen, Reibungsbremsen, Gasfedern oder dergleichen vorgesehen.

Bei Mittelkonsolen der beschriebenen Art besteht bei jeder Bauform grundsätzlich das Problem, dass die Betätigungsmechanik aus einer Vielzahl von Einzelteilen besteht, die zur Unterbringung einen nicht unerheblichen Raum beanspruchen.

Darüber hinaus besteht stets die Vorgabe, für die Betätigungsmechanik möglichst wenig nutzbaren Raum, insbesondere im Bereich des Innenraumes zur Aufnahme der Gegenstände abtrennen zu müssen. Außerdem besteht die Forderung, die einzelnen Elemente der Betätigungsmechanik möglichst unsichtbar unterzubringen, um das Design der Mittelkonsole nicht zu beeinträchtigen.

Diese einander zum Teil gegenseitig ausschließenden Vorgaben und Forderungen führen in der Praxis zu den verschiedensten Konstruktionen und insbesondere zu Kompromisslösungen.

Eine dieser Kompromisslösungen besteht beispielsweise darin, die Betätigungsmechanik unmittelbar im Deckel der Mittelkonsole anzuordnen. Einer derartigen Anordnung sind jedoch Grenzen gesetzt, sofern aus Designgründen besondere Deckelkonstruktionen und Deckelformen gewünscht werden. Auch wird dadurch der nutzbare Raum auf der Deckelunterseite eingeschränkt.

Eine wesentliche Rolle spielen bei der Gestaltung der Mittelkonsole auch die Scharnierbereiche des Deckels bzw. der Deckelflügel, die insbesondere bei besonders gestalteten Deckelkonstruktionen und aus Designgründen nicht an beliebiger Stelle angeordnet werden können.

Aufgabe der vorliegenden Erfindung ist es, eine Mittelkonsole mit möglichst großem nutzbaren Innenraum zu schaffen, deren Betätigungsmechanik für den Deckel sich auch für schwierige Deckelkonstruktionen und Deckelformen eignet, universell sowohl für Einzeldeckel als auch für Deckelflügel eingesetzt werden kann und möglichst wenig nutzbaren Raum für die Unterbringung der Betätigungsmechanik erfordert.

Diese Aufgabe wird erfindungsgemäß bei einer Mittelkonsole der gattungsgemäßen Art dadurch gelöst, dass der Deckel zumindest auf seiner Unterseite in bezug auf den Innenraum gewölbt ist, und dass die Betätigungsmechanik im Bereich einer Stirnseite des Grundkörpers in einer zur Schwenkachse senkrechten Ebene unterhalb des Deckels angeordnet ist.

Ein wesentliches Merkmal der vorliegenden Erfindung besteht darin, dass die Anordnung derart getroffen ist, dass die Betätigungsmechanik im Bereich der Stirnseite des Grundkörpers, und zwar quer zu dessen Erstreckungsrichtung, angeordnet wird. Durch die Anordnung in diesem Bereich des Grundkörpers geht im Innenraum lediglich geringfügig Raum verloren. Dies ist insbesondere bei Konstruktionen mit zwei Deckelflügeln vorteilhaft, da bei einer derartigen Ausführung für jeden Deckel eine Betätigungsmechanik und damit zwei Anordnungen dieser Art zur Verfügung gestellt werden müssen.

Gemäß einer vorteilhaften Weiterbildung der Erfindung ist der Deckel zumindest auf seiner Unterseite in Bezug auf den Innenraum derart konvex gewölbt, dass die Schwenkachse zumindest in ihrem mittleren Bereich außerhalb der Deckelkontur auf der dem Innenraum zugewandten Seite liegt. Daraus ergibt sich für die Praxis zum einen eine bedeutsame Vergrößerung des nutzbaren Innenraumes, insbesondere in Bezug auf die Innenraumhöhe. Zum anderen trägt dies zu einer ergonomischen Gestaltung der Oberseite des Deckels bzw. der Deckelflügel bei. Die Verlegung der Schwenkachse aus der Deckelkontur heraus wiederum führt zu erheblichen konstruktiven Freiheitsgraden bei der Gestaltung der Deckel.

Für besondere Anwendungsfälle kann der Deckel zumindest auf seiner Unterseite auch konkav gewölbt sein.

Grundsätzlich ist es erforderlich, dass jeder Deckel bzw. Deckelflügel auf seiner Unterseite zwei im Abstand zueinander angeordnete Lagervorsprünge für Lagerbolzen aufweist, deren Achsen jeweils in der Schwenkachse liegen.

Ein besonderes Element der vorliegenden Erfindung besteht darin, dass diese Lagervorsprünge bei spezieller Ausgestaltung die Verbindung zu der im Bereich der Stirnseite des Grundkörpers angeordneten Betätigungsmechanik herstellen können. Eine besonders vorteilhafte Ausgestaltung wird erfindungsgemäß dann erreicht, wenn zumindest einer der Lagervorsprünge als jeweils als auf der Unterseite der jeweiligen Deckels bzw. Deckelflügels angeordnete, im wesentlichen senkrecht von den Deckeln auskragende Hebelscheiben ausgebildet ist. Grundsätzlich können diese Hebelscheiben in der verschiedensten Weise gestaltet sein. Eine besonders vorteilhafte Gestaltung ist jedoch gegeben, wenn diese nach Art eines Viertelkreissektors ausgebildet sind, der im Bereich seines Zentriwinkels eine Bohrung für den jeweiligen Lagerbolzen aufweist.

Die Verbindung zur Betätigungsmechanik wird dadurch hergestellt, dass die jeweilige Hebelscheibe im Bereich ihres Umfanges eine Lagerstelle für das eine Ende einer Schubstange aufweist. Diese Schubstange ist Teil der Betätigungsmechanik und lässt sich im Bereich der Stirnseite des Grundkörpers ohne großen Platzbedarf unterbringen.

Grundsätzlich kann die Schubstange in der verschiedensten Weise betätigt werden. So kann die Schubstange beispielsweise mit einem Hebelsystem in Verbindung stehen, über das der Deckel bzw. die Deckelflügel in eine Offen- und eine Schließstellung verbringbar sind. Die Schubstange kann jedoch auch auf einer Führungsstange gelagert und an ihrem unteren Ende mit einer Druckfeder als Antrieb ausgestattet sein.

Grundsätzlich kann die Druckfeder in jeder beliebigen Weise im Bereich der Stirnseite des Grundkörpers angeordnet werden. Eine besonders vorteilhafte Anordnung ergibt sich jedoch, wenn die Druckfeder direkt auf der Schubstange gelagert ist.

Bei einem bevorzugten Ausführungsbeispiel wird als Bremseinrichtung eine Silikonbremse eingesetzt. Diese Silikonbremse kann mit einem Zahnrad ausgestattet sein, über das die Bremskräfte übertragen werden können. In einem solchen Fall ist es vorteilhaft, wenn erfindungsgemäß die Betätigungsmechanik mit einer Zahnstange ausgestattet ist, die mit dem Zahnrad der Silikonbremse in Eingriff steht.

Grundsätzlich kann die Zahnstange in jeder beliebigen Weise im Bereich der Stirnseite des Grundkörpers angeordnet werden. Vorteilhaft ist es jedoch, wenn die Zahnstange parallel zur Schubstange angeordnet wird und mit dieser über ein von der Zahnstange auskragendes Schubelement verbunden ist.

Eine derartige Anordnung lässt sich sehr platzsparend aufbauen und auf verschiedene Öffnungscharakteristiken einstellen.

Wie bereits dargestellt, ist ein wesentliches Element der vorliegenden Erfindung die auf der Unterseite des jeweiligen Deckelflügels angeordnete, viertelkreissektorförmige Hebelscheibe, die die Lagerstelle für das Ende der Schubstange trägt.

Eine besonders vorteilhafte Ausgestaltung ergibt sich, wenn in einem solchen Fall der Grundkörper im Bereich seines, den Deckelflügeln zugewandten Oberrandes mit Einschubschlitzen für die Hebelscheiben ausgestattet ist. Die Einschubschlitze verlaufen zweckmäßigerweise quer zur Mittelkonsolenlängsrichtung und sind jeweils im Bereich der Stirnseiten des Grundkörpers angeordnet, in welcher die Betätigungsmechanik liegt. Erfindungsgemäß ist die Anordnung dabei derart getroffen, dass die Hebelscheiben beim Schließen in die Einschubschlitze am Oberrand des Grundkörpers eintauchen.

Die Verriegelungseinrichtung und die Entriegelungseinrichtung können - wie eingangs bereits beschrieben - in der verschiedensten Weise ausgestaltet sein und Drucktasten, Druckflächen besitzen sowie mit Sperranordnungen unterschiedlichster Bauart zusammenwirken.

Im Folgenden ist zur weiteren Erläuterung und zum besseren Verständnis der Erfindung ein Ausführungsbeispiel unter Bezugnahme auf die beigefügten Zeichnungen näher beschrieben und erläutert.

Die beigefügten Zeichnungen sind stark schematisiert und vereinfacht und zeigen lediglich eine Variante von einer Vielzahl von möglichen Varianten.

So hat die Mittelkonsole eines Fahrzeuges in aller Regel eine sehr komplexe Form, auf deren Darstellung aufgrund der Schematisierung verzichtet wurde.
- Fig. 1: zeigt eine Draufsicht auf eine Mittelkonsole mit einem so genannten Schmetterlingsdeckel, bei dem die Deckelflügel in die Offenstellung verschwenkt sind,
- Fig. 2a: zeigt einen Schnitt in der Ebene II-II der Fig. 1 mit einer Seitenansicht der Betätigungsmechanik in der in Fig. 1 dargestellten Offenstellung,
- Fig. 2b: zeigt eine der Fig. 2a entsprechende Darstellung in einer Zwischenstellung, und
- Fig. 2c: zeigt eine den Fig. 2a und 2b entsprechende Darstellung, wobei sich der Deckelflügel in seiner Schließstellung befindet.

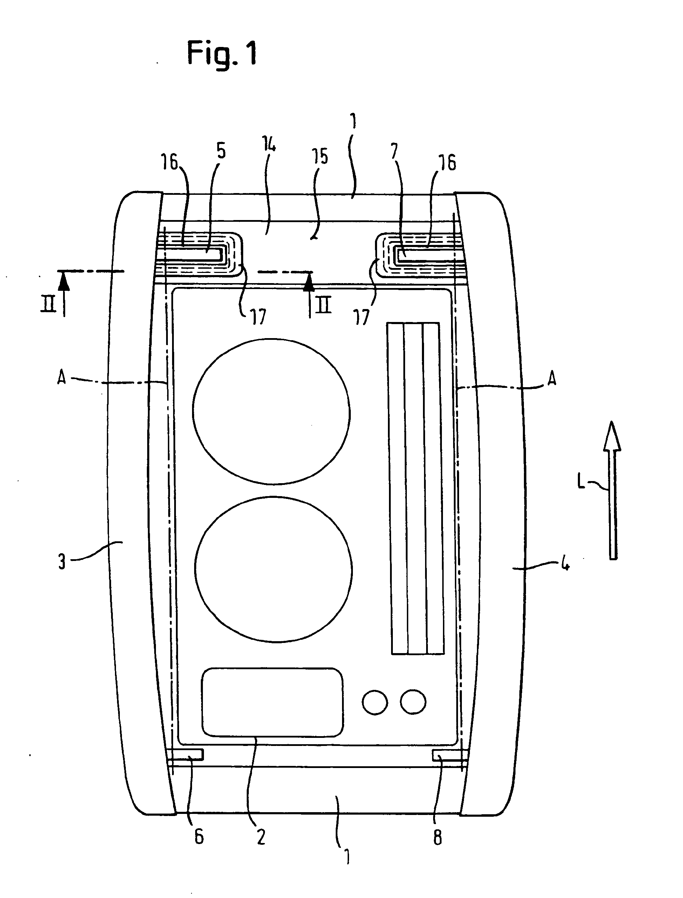

Wie aus Fig. 1 erkennbar, besteht die Mittelkonsole aus einem sich in Fahrzeuglängsrichtung L erstreckenden Grundkörper 1, dessen Innenraum zur Aufnahme von Gegenständen mit einer entsprechenden Halterung 2 ausgestattet ist.

Wie bereits erwähnt, ist die dargestellte Variante der Mittelkonsole mit einem so genannten Schmetterlingsdeckel ausgestattet, der aus zwei Deckelflügeln 3 und 4 besteht, welche jeweils um eine im Wesentlichen waagrechte, in Mittelkonsolenlängsrichtung verlaufende Achse A schwenkbar sind.

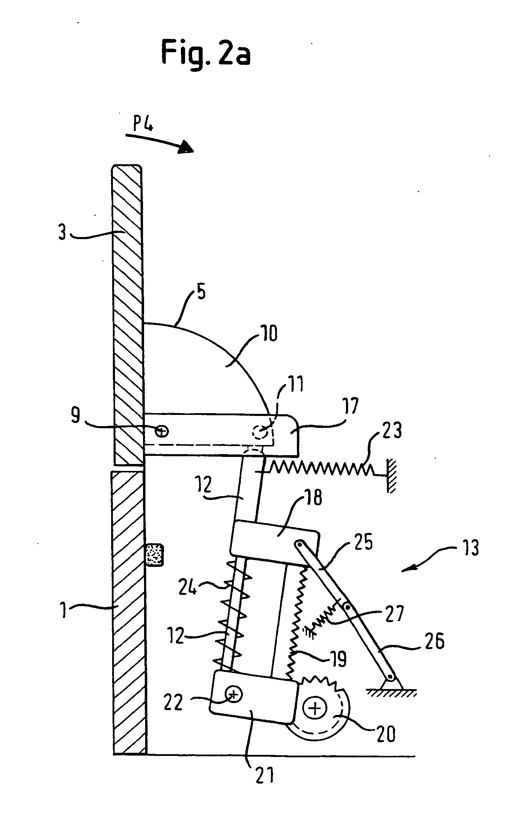

In der dargestellten Variante sind die Achsen A der Deckelflügel 3 und 4 jeweils im Bereich der einander abgewandten Längsseiten des jeweiligen Deckelflügels angeordnet, so dass die Deckelflügel 3 und 4 in der Offenstellung nach oben geklappt sind, wie dies die Figur 2a für den in Figur 1 linken Deckelflügel 3 zeigt.

Wie aus Fig. 1 ferner hervorgeht, ist jeder Deckelflügel 3 bzw. 4 (in Schließstellung betrachtet) auf seiner Unterseite mit zwei im Abstand zueinander angeordneten Lagervorsprüngen 5 und 6 bzw. 7 und 8 ausgestattet, welche Lagerbolzen 9 (vgl. Figuren 2a bis 2c) aufweisen, deren Achsen jeweils in der Schwenkachse A liegen.

In der vorliegenden Variante sind die Lagervorsprünge 5 und 6 bzw. 7 und 8 jeweils in Abstand voneinander im Bereich der Stirnenden der Deckelflügel, d.h. außerhalb des Innenraumes bzw. der Halterung 2 für die Gegenstände angeordnet.

Bei der in Fig. 1 dargestellten Variante ist jeweils einer der Lagervorsprünge (5 bzw. 7) als auf der Unterseite des jeweiligen Deckelflügels 3 bzw. 4 angeordnete, im Wesentlichen senkrecht von dieser auskragende viertelkreissektorförmige Hebelscheibe 10 ausgebildet, die im Bereich ihres Zentriwinkels eine Bohrung für den Lagerbolzen 9 aufweist.

Wie sich aus den Fig. 2a bis 2c ergibt, ist die Hebelscheibe 10 im Bereich ihres Umfanges mit einer Lagerstelle 11 für das eine Ende einer Schubstange 12 ausgestattet. Die Schubstange 12 ist Teil der Betätigungsmechanik 13, die in den Fig. 2a bis 2c in einer Seitenansicht in den Eingangs erwähnten Stellungen dargestellt ist. Die Betätigungsmechanik 13 befindet sich im vorderen Teil 14 des Grundkörpers 1, d.h. im Bereich der in Fahrzeuglängsrichtung L vorderen Stirnseite in einer zur Schwenkachse A senkrechten Ebene unterhalb der Deckelkonstruktion, wie dies die Fig. 2a bis 2c zeigen. Dieser vordere Teil 14 des Grundkörpers ist nach oben durch eine Wandung 15 abgeschlossen, die jeweils im Bereich des Lagervorsprunges 5 bzw. der Hebelscheibe 10 einen Einschubschlitz 16 aufweist, der innerhalb eines mit der Wandung 15 verbundenen Kragens 17 angeordnet ist.

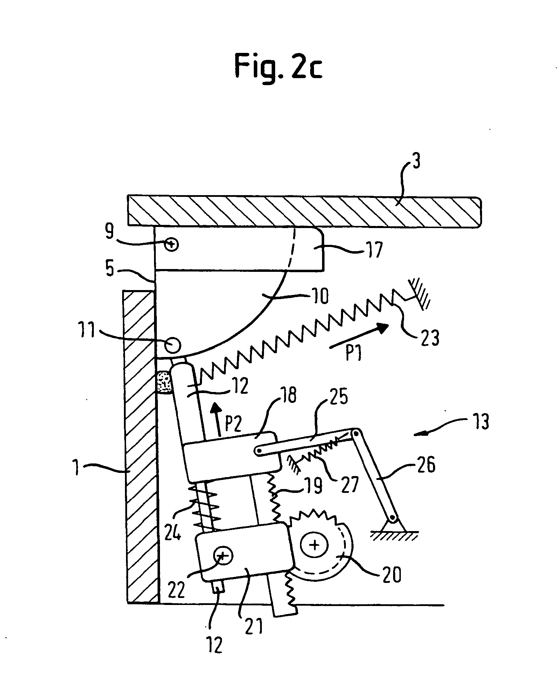

Die Anordnung ist dabei derart getroffen, dass die Hebelscheibe 10, wie die Fig. 2a bis 2c zeigen, in den Einschubschlitz 16 rechts des Kragens 17 bei einer Bewegung von der Offenstellung (Fig. 2a) in die Schließstellung (Fig. 2c) eintauchen kann.

Wie sich aus den Fig. 2a bis 2c ferner ergibt, ist die Schubstange 12 der Betätigungsmechanik 13 etwa in ihrer Mitte mit einem Ausleger 18 fest verbunden, der an seinem freien Ende eine Zahnstange 19 trägt, die parallel zur Schubstange 12 verläuft und mit einem Zahnrad 20 in Eingriff steht. Das Zahnrad 20 ist mit einer Silikonbremse (nicht dargestellt) verbunden, die in der vorliegenden Variante die Bremseinrichtung für die Betätigungsmechanik 13 bildet.

Das untere Ende der Schubstange 12 ist in einem Lagerblock 21 geführt, welcher über eine Achse 22 in Grenzen verschwenkbar am Grundkörper 1 gelagert ist. Der Lagerblock dient in der vorliegenden Variante zur Führung des unteren Teiles der Schubstange 12 und der Zahnstange 19, wie sich insbesondere aus der Fig. 2c ergibt.

Am oberen Ende der Schubstange 12 unterhalb der Lagerstelle 11 ist an der Schubstange eine Zugfeder 23 mit einem Ende angelenkt, deren anderes Ende an dem Grundkörper 1 befestigt ist.

Auf dem unteren Ende der Schubstange 12 ist zwischen dem Ausleger 18 und dem Lagerblock 21 eine Druckfeder 24 angeordnet, die in der vorliegenden Variante den Antrieb für die Betätigungsmechanik 13 bildet, wie im Folgenden noch beschrieben werden wird.

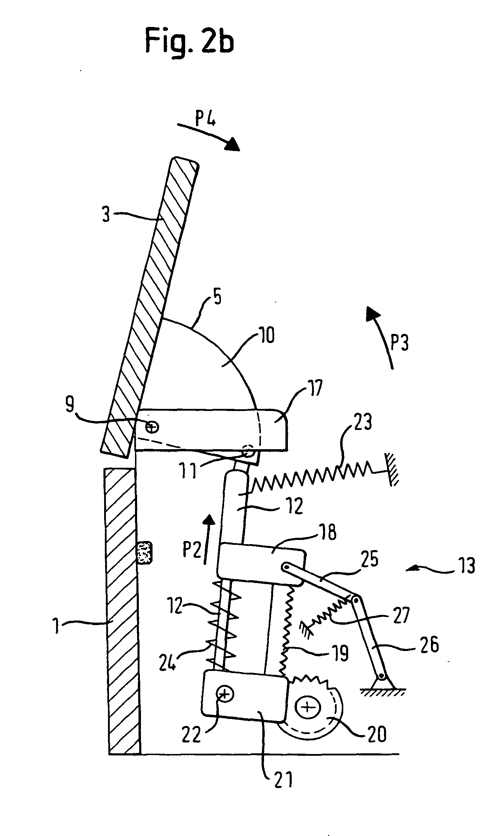

An dem Ausleger 18 ist mit ihrem einen Ende eine erste Lasche 25 schwenkbar befestigt, die mit dem anderen Ende an einer zweiten Lasche 26 angelenkt ist, deren anderes Ende an dem Grundkörper 1 schwenkbar befestigt ist. Die erste Lasche 25 und die zweite Lasche 26 bilden eine Kniehebelanordnung, welche über eine Zugfeder 27 in Richtung ihrer Totpunktlage beaufschlagt wird. Die Anordnung ist dabei derart getroffen, dass sich die erste Lasche 25 und die zweite Lasche 26 nicht vollständig in der Totpunktlage befinden, so dass eine Auslenkung möglich ist, wie dies in den Fig. 2b und 2c dargestellt ist.

In der Normalstellung befinden sich die Deckelflügel 3 und 4 der Mittelkonsole in der Schließstellung, in der der Innenraum des Grundkörpers 1 nach oben hin verschlossen ist. Dies ist in Fig. 2c am Beispiel des Deckelflügels 3 dargestellt. In dieser Schließstellung ist der Deckelflügel 3 über eine nicht dargestellte Verriegelungseinrichtung verriegelt. Wird die Verriegelungseinrichtung gelöst, so zieht die Zugfeder 23 den oberen Teil der Schubstange in Richtung des Pfeils P1 (vgl. Fig. 2c), so dass sich die Schubstange 12 aus ihrer Totpunktlage zwischen dem Lagerbolzen 9 und der Achse 22 heraus bewegen kann.

Sobald die Totpunktlage verlassen ist, kann die Druckfeder 24 den Ausleger 18 in Richtung des Pfeils P2 (vgl. Fig. 2b und 2c) verschieben. Diese Verschiebebewegung in Richtung des Pfeils P2 wird durch die Bremseinrichtung in bekannter Weise verzögert, so dass sich keine schlagartige, sondern eine weiche kontinuierliche Öffnungsbewegung einstellt, wie dies in Fig. 2b mit dem Pfeil P3 angedeutet ist. Diese Öffnungsbewegung wird durch die Zugfeder 23 unterstützt.

Nach Abschluss der Öffnungsbewegung befindet sich der Deckelflügel 3 in der in Fig. 2a dargestellten Offenstellung. In dieser Offenstellung ist der Ausleger 18 vollständig nach oben ausgefahren, so dass sich - unterstützt durch die Zugfeder 27 - die erste Lasche 25 und die zweite Lasche 26 beinahe in ihrer Totpunktlage befinden und auf diese Weise den Deckelflügel 3 sicher in seiner Offenstellung halten. Dies wird durch die Druckfeder 24 auf der Schubstange 12 unterstützt.

Für den Schließvorgang wird der Deckelflügel 3 in Richtung des Pfeils P4 (vgl. Fig. 2a) bewegt. Dadurch taucht die Hebelscheibe 10 in den Einschubschlitz 16 des Kragens 17 des Grundkörpers 1 ein und drückt die Schubstange 12 gegen die Kraft der Druckfeder 24 nach unten. Gegen den Widerstand der Zugfeder 27 werden dabei die erste Lasche 25 und die zweite Lasche 26 aus ihrer Beinahe-Totpunktlage heraus bewegt, wie dies in der in Fig. 2b gezeigten Zwischenstellung dargestellt ist. Der Deckelflügel 3 kann dann weiter in Richtung des Pfeils P4 bewegt und in seine in Fig. 2c gezeigte Schließstellung verbracht werden, in der die Deckelflügel dann über die nicht dargestellte Verriegelungseinrichtung bis zum nächsten Öffnungsvorgang gehalten werden.

## Patentansprüche

1. Mittelkonsole für ein Fahrzeug,
- mit einem sich in Fahrzeuglängsrichtung (L) erstreckenden Grundkörper (1), mit einem Innenraum zur Aufnahme von Gegenständen,
- mit einem Deckel (3, 4), der zumindest teilweise die Oberseite des Grundkörpers (1) bildet und um eine im Wesentlichen in Mittelkonsolenlängserstreckung verlaufende Achse (A) in eine Schließ- bzw. eine Offenstellung verschwenkbar ist,
- wobei der Deckel (3, 4) in der Schließstellung mit seiner Oberseite zumindest einen Teil einer Armauflage bildet und in seiner Offenstellung den Innenraum frei gibt,
- ferner mit einer Betätigungsmechanik (13) für den Deckel, welche mit einem Antrieb, einer Verriegelungs- und einer Entriegelungseinrichtung sowie einer Bremseinrichtung ausgestattet ist,
**dadurch gekennzeichnet, dass**
der Deckel (3, 4) zumindest auf seiner Unterseite in bezug auf den Innenraum gewölbt ist, und dass die Betätigungsmechanik (13) im Bereich einer Stirnseite des Grundkörpers (1) in einer zur Schwenkachse (A) senkrechten Ebene unterhalb des Deckels (3, 4) angeordnet ist.

2. Mittelkonsole nach Anspruch 1, **dadurch gekennzeichnet, dass** der Deckel (3, 4) zumindest auf seiner Unterseite in Bezug auf den Innenraum derart konvex gewölbt ist, dass die Schwenkachse (A) zumindest in ihrem mittleren Bereich außerhalb der Deckelkontur auf der dem Innenraum zugewandten Seite liegt.

3. Mittelkonsole nach Anspruch 1, **dadurch gekennzeichnet, dass** der Deckel (3, 4) zumindest auf seiner Unterseite in Bezug auf den Innenraum konkav gewölbt ist.

4. Mittelkonsole nach Anspruch 1, 2 oder 3 **dadurch gekennzeichnet, dass** der Deckel in Mittelkonsolenlängsrichtung in zwei Deckelflügel (3 und 4) geteilt ist und die Deckelflügel (3, 4) jeweils um eine im Wesentlichen waagrechte, in Mittelkonsolenlängsrichtung verlaufende Achse (A) verschwenkbar sind.

5. Mittelkonsole nach Anspruch 4, **dadurch gekennzeichnet, dass** die Achsen (A) der Deckelflügel (3, 4) jeweils im Bereich der einander abgewandten Längsseiten der Deckelflügel verlaufen.

6. Mittelkonsole nach einem der vorhergehenden Ansprüche, **dadurch gekennzeichnet, dass** jeder Deckel bzw. Deckelflügel auf seiner Unterseite zwei im Abstand zueinander angeordnete Lagervorsprünge (5, 6, 7, 8) für Lagerbolzen (9) aufweist, deren Achse jeweils in der Schwenkachse liegt.

7. Mittelkonsole nach Anspruch 6, **dadurch gekennzeichnet, dass** die Lagervorsprünge (5, 7) jeweils im Bereich der Stirnenden der Deckelflügel angeordnet sind.

8. Mittelkonsole nach Anspruch 6, **dadurch gekennzeichnet, dass** die Lagervorsprünge (5, 7) jeweils als auf der Unterseite des jeweiligen Deckels bzw. Deckelflügels angeordnete, im Wesentlichen senkrecht von dieser auskragende viertelkreissektorförmige Hebelscheibe (10) ausgebildet sind, die im Bereich ihres Zentriwinkels eine Bohrung für den Lagerbolzen (9) aufweist.

9. Mittelkonsole nach Anspruch 8, **dadurch gekennzeichnet, dass** die Hebelscheibe (10) im Bereich ihres Umfanges eine Lagerstelle (11) für das eine Ende einer Schubstange (12) aufweist, die Teil der Betätigungsmechanik (13) ist.

10. Mittelkonsole nach Anspruch 8, **dadurch gekennzeichnet, dass** der Grundkörper (1) im Bereich seines den Deckelflügeln zugewandten Oberrandes Einschubschlitze (16) für die Hebelscheiben (10) aufweist.

11. Mittelkonsole nach Anspruch 10, **dadurch gekennzeichnet, dass** die Einschubschlitze (16) quer zur Mittelkonsolenlängsrichtung verlaufen und jeweils im Bereich der Stirnseiten des Grundkörpers (1) angeordnet sind.

12. Mittelkonsole nach Anspruch 9, **dadurch gekennzeichnet, dass** die Schubstange (12) mit einem Hebelsystem in Verbindung steht, über das die Deckel bzw. die Deckelflügel in eine Offen- und eine Schließstellung verbringbar sind.

13. Mittelkonsole nach Anspruch 1 und 12, **dadurch gekennzeichnet, dass** als Antrieb eine Druckfeder (24)vorgesehen ist, die auf der Schubstange (12) gelagert ist.

14. Mittelkonsole nach Anspruch 1, 12 und 13, **dadurch gekennzeichnet, dass** das Hebelsystem eine Zahnstange (19) umfasst, die mit einem Zahnrad (20) in Eingriff steht, das mit der Bremseinrichtung verbunden ist.

15. Mittelkonsole nach Anspruch 14, **dadurch gekennzeichnet, dass** die Bremseinrichtung als Silikonbremse ausgestaltet ist.

16. Mittelkonsole nach Anspruch 14, **dadurch gekennzeichnet, dass** die Zahnstange (19) parallel zur Schubstange (12) verläuft.

17. Mittelkonsole nach Anspruch 14 und 16, **dadurch gekennzeichnet, dass** die Zahnstange (19) mit der Schubstange (12) verbunden ist.

## Claims

1. Central console for a vehicle
- having a base member (1) extending in the longitudinal direction (L) of the vehicle and with an internal space for accommodating articles,
- having a cover (3, 4) that forms at least in part the upper side of the base member (1) and is pivotable into a closed or open position about an axis (A) running substantially in the longitudinal extension of the central console,
- wherein the cover (3, 4) in the closed position forms with its upper side at least part of an armrest and in its open position gives access to the internal space,
- and further having for the cover an actuating mechanism (13) equipped with a drive, a locking and an unlocking device as well as a braking device,
**characterised in that**
the cover (3, 4) at least on its underside is arched with respect to the internal space and that the actuating mechanism (13) is arranged beneath the cover (3, 4) in the region of an end face of the base member (1) in a plane perpendicular to the pivot axis (A).

2. Central console according to claim 1, **characterised in that** the cover (3, 4) at least on its underside is arched in convex manner with respect to the internal space in such a way that the pivot axis (A) at least in its central region lies outside the contour of the cover on the side facing towards the internal space.

3. Central console according to claim 1, **characterised in that** the cover (3, 4) at least on its underside is arched in concave manner with respect to the internal space.

4. Central console according to claim 1, 2 or 3, **characterised in that** the cover is divided in the longitudinal direction of the central console into two cover flaps (3 and 4) and the cover flaps (3, 4) are each pivotable about a substantially horizontal axis (A) running in the longitudinal direction of the central console.

5. Central console according to claim 4, **characterised in that** the axes (A) of the cover flaps (3, 4) each run in the region of the longitudinal sides of the cover flaps facing away from one another.

6. Central console according to any of the preceding claims, **characterised in that** each cover or cover flap has on its underside two bearing projections (5, 6, 7, 8) for bearing pins (9) whose axis in each case lies in the pivot axis.

7. Central console according to claim 6, **characterised in that** the bearing projections (5, 7) are each arranged in the region of the front ends of the cover flaps.

8. Central console according to claim 6, **characterised in that** the bearing projections (5, 7) are each constructed as a quadrant-shaped lever plate (10) arranged on the underside of the cover or cover flap in question and projecting substantially at right angles, which plate in the region of its centre angle has a bore for the bearing pin (9).

9. Central console according to claim 8, **characterised in that** the lever plate (10) has in the region of its perimeter a bearing point (11) for one end of a thrust rod (12) forming part of the actuating mechanism (13).

10. Central console according to claim 8, **characterised in that** in the region its upper edge facing towards the cover flaps the base member (1) has insertion slots (16) for the lever plates (10).

11. Central console according to claim 10, **characterised in that** the insertion slots (16) run transverse to the longitudinal direction of the central console and are each arranged in the region of the end faces of the base member (1).

12. Central console according to claim 9, **characterised in that** the thrust rod (12) is connected to a lever system through which the covers or cover flaps are movable into an open and a closed position.

13. Central console according to claim 1 and 12, **characterised in that** for the drive a compression spring (24) is provided which is mounted on the thrust rod (12).

14. Central console according to claim 1, 12 and 13, **characterised in that** the lever system comprises a toothed rack (19) in engagement with a gear wheel (20) that is connected to the braking device.

15. Central console according to claim 14, **characterised in that** the braking device is devised in the form of a silicone brake.

16. Central console according to claim 14, **characterised in that** the toothed rack (19) runs parallel to the thrust rod (12).

17. Central console according to claim 14 and 16, **characterised in that** the toothed rack (19) is connected to the thrust rod (12).

## Revendications

1. Console centrale pour un véhicule,
- avec un corps de base (1) qui s'étend dans le sens de la longueur du véhicule (L) et qui a un espace intérieur pour loger des objets,
- avec un couvercle (3, 4) qui forme au moins partiellement le dessus du corps de base (1) et qui peut pivoter autour d'un axe (A) s'étendant globalement dans le sens de la longueur de la console centrale pour atteindre une position ouverte ou une position fermée,
- le couvercle (3, 4) en position fermée formant avec son dessus au moins une partie d'un accoudoir et le couvercle en position ouverte dégageant l'espace intérieur,
- de plus, avec un mécanisme d'actionnement (13) qui est destiné au couvercle et qui est équipé d'un dispositif d'entraînement, d'un dispositif de verrouillage et de déverrouillage ainsi que d'un dispositif de freinage,
**caractérisée par le fait que** le couvercle (3, 4) est voûté convexe au moins pour ce qui est de son dessous par rapport à l'espace intérieur et que le mécanisme d'actionnement (13) est placé en dessous du couvercle (3, 4) dans la zone d'un côté frontal du corps de base (1) dans un plan perpendiculaire à l'axe de pivotement (A).

2. Console centrale selon la revendication 1, **caractérisée par le fait que** le couvercle (3, 4) est voûté convexe au moins pour ce qui est de son dessous par rapport à l'espace intérieur de telle sorte que l'axe de pivotement (A) se trouve au moins dans sa zone médiane en dehors du contour de couvercle sur le côté proche de l'espace intérieur.

3. Console centrale selon la revendication 1, **caractérisée par le fait que** le couvercle (3, 4) est voûté concave au moins pour ce qui est de son dessous par rapport à l'espace intérieur.

4. Console centrale selon la revendication 1, 2 ou 3, **caractérisée par le fait que** le couvercle est divisé dans le sens de la longueur de la console centrale en deux ailes de couvercle (3 et 4) et que les ailes de couvercle (3, 4) peuvent pivoter chacune autour d'un axe (A) globalement horizontal s'étendant dans le sens de la longueur de la console centrale.

5. Console centrale selon la revendication 4, **caractérisée par le fait que** les axes (A) des ailes de couvercle (3, 4) s'étendent chacun dans la zone des côtés longitudinaux, éloignés l'un de l'autre, des ailes de couvercle.

6. Console centrale selon l'une des revendications précédentes, **caractérisée par le fait que** chaque couvercle ou aile de couvercle comporte sur son dessous deux parties en saillie de palier (5, 6, 7, 8) placées à distance l'une de l'autre et destinées à des tourillons (9) dont l'axe se trouve à chaque fois dans l'axe de pivotement.

7. Console centrale selon la revendication 6, **caractérisée par le fait que** les parties en saillie de palier (5, 7) sont placées chacune dans la zone des extrémités frontales des ailes de couvercle.

8. Console centrale selon la revendication 6, **caractérisée par le fait que** les parties en saillie de palier (5, 7) sont conçues chacune comme un plateau d'échappement (10) agencé sur le dessous du couvercle respectif ou de l'aile de couvercle respective, en porte-à-faux globalement perpendiculairement par rapport à celui-ci ou à celle-ci, en forme de secteur de quart de cercle et comportant un trou pour le tourillon (9) dans la zone de son angle au centre.

9. Console centrale selon la revendication 8, **caractérisée par le fait que** le plateau (10) comporte dans la zone de sa circonférence un point d'appui (11) pour une extrémité d'une bielle (12) qui fait partie du mécanisme d'actionnement (13).

10. Console centrale selon la revendication 8, **caractérisée par le fait que** le corps de base (1) comporte dans la zone de son bord supérieur proche des ailes de couvercle des fentes d'insertion (16) pour les plateaux (10).

11. Console centrale selon la revendication 10, **caractérisée par le fait que** les fentes d'insertion (16) s'étendent transversalement au sens de la longueur de la console centrale et sont agencées chacune dans la zone des côtés frontaux du corps de base (1).

12. Console centrale selon la revendication 9, **caractérisée par le fait que** la bielle (12) est en liaison avec un système de levier par l'intermédiaire duquel le couvercle ou les ailes de couvercle peuvent être mis dans une position ouverte ou dans une position fermée.

13. Console centrale selon les revendications 1 et 12, **caractérisée par le fait qu'**il est prévu comme dispositif d'entraînement un ressort de pression (24) qui est monté sur la bielle (12).

14. Console centrale selon les revendications 1, 12 et 13, **caractérisée par le fait que** le système de levier comprend une crémaillère (19) qui est en prise avec une roue dentée (20) qui est reliée au dispositif de freinage.

15. Console centrale selon la revendication 14, **caractérisée par le fait que** le dispositif de freinage est conçu comme un frein au silicone.

16. Console centrale selon la revendication 14, **caractérisée par le fait que** la crémaillère (19) s'étend parallèlement à la bielle (12).

17. Console centrale selon les revendications 14 et 16, **caractérisée par le fait que** la crémaillère (19) est reliée à la bielle (12).
